# NEUE EUROPÄISCHE PATENTSCHRIFT

(11) **EP 0 761 084 B2**
(45) Veröffentlichungstag und Bekanntmachung des Hinweises auf die Entscheidung über den Einspruch: **02.05.2002**
(45) Hinweis auf die Patenterteilung: 24.02.1999
(21) Anmeldenummer: 96112257.9
(22) Anmeldetag: 30.07.1996
(51) Int. Cl.: A01C 15/00

(54) **Verfahren zum Steuern und/oder Regeln von landwirtschaftlichen Bearbeitungs- und/oder Verteilmaschinen.**
Method for controlling and/or regulating agricultural processing and/or distributing machines
Procédé de commande et de régulation de machines agricoles de travail et/ou de distribution

(30) Priorität: 06.09.1995 DE 19532870; 31.01.1996 DE 19603426
(43) Veröffentlichungstag der Anmeldung: 12.03.1997
(60) Teilanmeldung: 98114443.9
(73) Patentinhaber: Amazonen-Werke H. Dreyer GmbH & Co. KG, 49205 Hasbergen (DE)
(72) Erfinder: Scheufler, Bernd, Dr.-Ing., 49205 Hasbergen (DE); Kemper, Martin, Dipl.-Ing., 49170 Hagen a.T.W. (DE); Marquering, Johannes, 49134 Wallenhorst-Rulle (DE)
(74) Vertreter: Grünecker, Kinkeldey, Stockmair & Schwanhäusser Anwaltssozietät

(56) Entgegenhaltungen:
- EP-A- 0 181 308
- EP-A- 0 266 527
- EP-A- 0 570 792
- EP-A- 0 578 988
- EP-A- 0 726 024
- EP-A- 0 730 819
- WO-A-95/04450
- DE-A- 4 342 171
- DE-A- 4 423 083
- US-A- 5 220 876
- Schueller et al, Computer and Electronics in Agriculture, Volume 11, No. 1, October 1994, pages 69 - 83, Elsevier Science B.V.

## Beschreibung

Die Erfindung betrifft ein Verfahren gemäß des Oberbegriffes des Patentanspruches 1.

In der Landwirtschaft sind verschiedene Verfahren zum Steuern und/oder Regeln von landwirtschaftlichen Bearbeitungs- und/oder Verteilmaschinen bekannt, die sich zur momentanen Positionsermittlung der Maschine auf dem Feld auf das sogenannte DGPS (Differential Global Position System) stützen. Bei diesem Verfahren sind Rechner vorgesehen, in welchem maschinenspezifische Daten zur Einstellung der Maschine je Standort und Fläche eingespeichert sind, wie beispielsweise in der DE-43 42 171 A1 beschrieben ist.

Der Erfindung liegt die Aufgabe zugrunde, auf einfache Weise die Datenmenge, die in dem Rechner einzuspeichern ist, erheblich zu reduzieren, wobei jedoch eine ausreichend genaue Ausbringung gewährleistet bleibt.

Diese Aufgabe wird durch die kennzeichnenden Merkmale des Patentanspruches 1 gelöst. Infolge dieser Maßnahmen werden die Karten gerastert, so daß die Datenmenge begrenzt und somit erheblich gegenüber dem bekannten Verfahren reduziert wird. Bei der Rasterung akzeptiert man eine gewisse Ungenauigkeit, wobei das Ergebnis jedoch noch ausreichend genau, im Hinblick auf die zum Einsatz kommenden Maschinen und der Feld- und Bodeneigenschaften, ist. Somit werden also Arbeitsdateien zur optimalen Ansteuerung von Zentrifugaldüngerstreuern und anderen landwirtschaftlichen Maschinen unter Berücksichtigung von Verteilcharakteristiken im Bezug auf Applikationskarten erstellt.

Es ist erfindungsgemäß vorgesehen, daß aufgrund der gerasterten Applikationskarte und der maschinenspezifischen Charakteristik eine Arbeitsdatei erstellt wird, und daß diese Arbeitsdatei eine optimale Anpassung zwischen Applikationskarte und Verteilcharakteristik darstellt. Hierdurch ergibt sich eine möglichst genaue Ausbringung des Materials entsprechend der Bodenbeschaffenheit und Bodenversorgung an Nährstoffen etc.. Eine besonders gute Abstimmung zwischen Applikationskarte und Verteilcharakteristik der Verteilmaschine wird dadurch erreicht, daß die Rasterung in Richtung der Fahrgasse bzw. in Richtung der Fahrtrichtung der Verteilmaschine angelegt wird.

Zusammenfassend wird also folgender Grundgedanke verfolgt:

Bei einer flächenspezifischen Bewirtschaftung werden für eine angepaßte Düngerabgabe unter der Hinzunahme von Bodenproben, Ertragskarten, Klimadaten usw. Appliationskarten erstellt. Diese Karten werden dann gerastert, um die Datenmenge zu begrenzen. Bei der Rasterung akzeptiert man eine gewisse Ungenauigkeit. Bedingt durch den dreidimensionalen Streufächer eines Schleuderstreuers ist eine genau der Rasterung entsprechende Ausbringung des Streugutes nicht möglich. In dem Bordcomputer wird eine Arbeitsdatei hinterlegt, so daß sich eine optimale Anpassung zwischen Applikationskarte und Verteilcharakteristik beim Düngen, beispielsweise mit einem Schleuderstreuer ergibt.

Weitere Einzelheiten der Erfindung sind den übrigen Unteransprüchen, der Beispielsbeschreibung und den Zeichnungen zu entnehmen. Hierbei zeigen
- Fig.1: den Ausschnitt einer Bodenkarte eines Feldes,
- Fig.2: die Bodenkarte gemäß Fig.1 mit einem darüber gelegten Raster,
- Fig.3: die Bodenkarte gemäß Fig.1, wobei die Flächenbereiche entsprechend des Rasters nach Fig.2 gerastert sind.

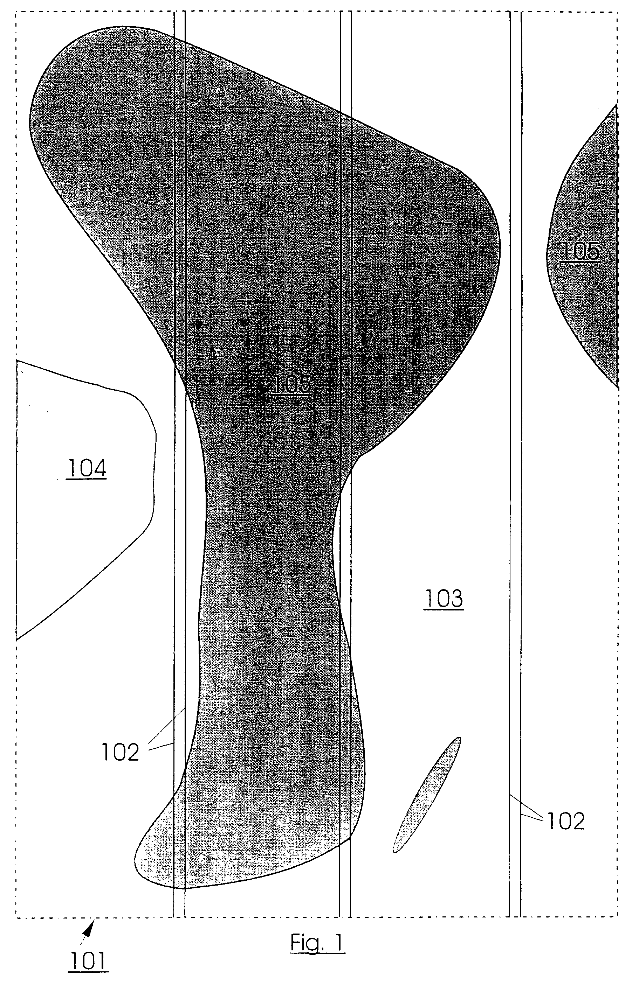

Zur bedarfsgerechten Bewirtschaftung von Flächen werden gemäß Fig. 1 zunächst in eine Bodenkarte die spezifischen Beschaffenheiten, wie beispielsweise Nährstoffversorgung, Bodenfestigkeit und/oder Bodenart etc. eingetragen. Hierdurch ergibt sich beispielsweise eine Applikationskarte 101, wie sie in Fig.1 ausschnittsweise dargestellt ist. Mit den durchzogenen Linien sind die Fahrgassen 102 dargestellt, in welchen Abständen sie angelegt und in welchen Abständen das Feld durchfahren werden soll, um so eine genaues Anschlußfahren zu gewährleisten.

Desweiteren sind verschiedene Teilfächen unterschiedich schattiert dargestellt. Die weiß unterlegte Fläche 103 stellt die überwiegende Beschaffenheit des Feldes, beispielsweise die Basisbeschaffenheit dieses Feldes dar.

Die hell schattierte Fläche 104 stellt einen Bereich mit einer gegenüber der Basisfläche 103 niedrigeren Nährstoffversorgung dar, während die dunkler schattierten Flächen 105 einen höheren Nährstoffversorgung als die Basisfläche 3 aufweisen. Die in gleicher Weise schattierten Flächen weisen also eine ähnliche oder gleiche Nährstoffversorgung auf.

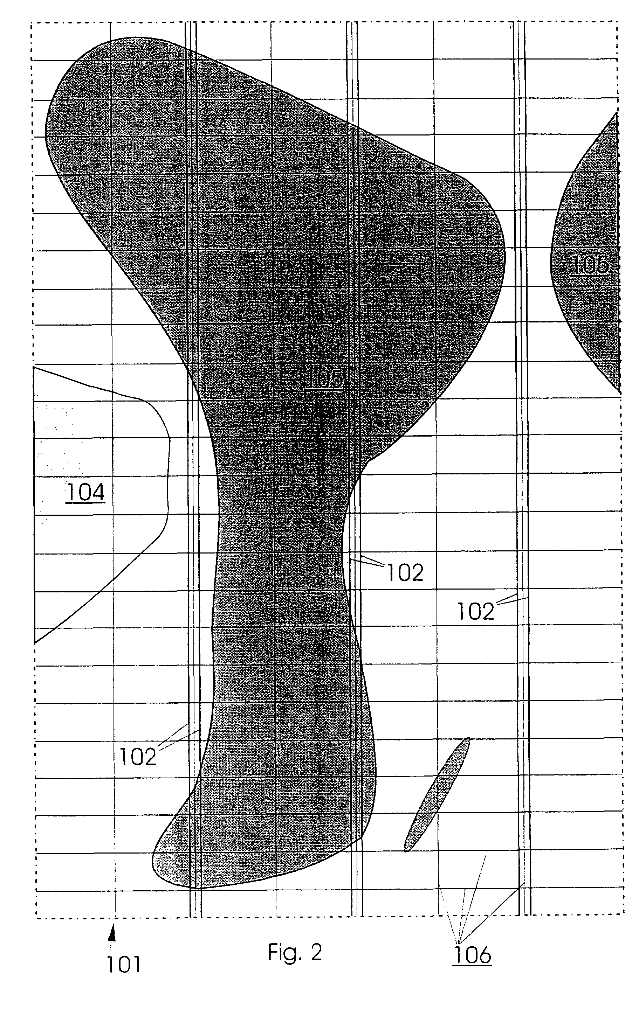

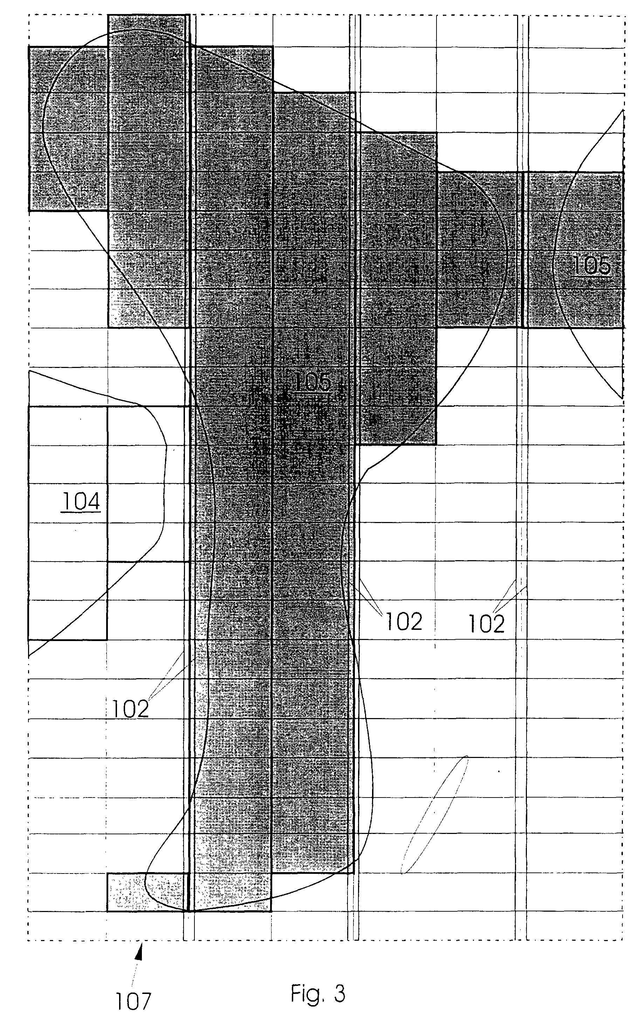

Um nun die Datenmenge zu begrenzen und eine einfachere, jedoch ausreichend genaue Steuerung der Ausbringmenge einer Verteilmaschine erreichen zu können, wird über die Karte gemäß Fig.1 ein Raster 106, wie dieses in Fig.2 dargestellt ist, gelegt. Entsprechend dieses Rasters 106 werden dann die Flächen 103, 104, 105 entsprechend der Verteilcharakteristik und der Bodenbeschaffenheit entsprechend Fig.3 festgelegt. Die Fig.3 zeigt also die gerasterte Applikationskarte 107 der Karte 101 gemäß Fig.1.

Desweiteren wird aufgrund der gerasterten Applikationskarte 107 und der maschinenspezifischen Verteilcharakteristik der jeweils zum Einsatz kommenden Verteilmaschine eine Arbeitsdatei erstellt. Diese Arbeitsdatei stellt eine optimale Anpassung zwischen der Applikationskarte 107 und Verteilcharakteristik der zum Einsatz kommenden Verteilmaschine dar.

Entsprechend der Arbeitsdatei werden dann die Dosierorgane der Verteilmaschine gesteuert bzw. geregelt, so daß in gewünschter Weise das auszubringende Verteilgut ausgebracht wird.

In vorteilhafter Weise wird die Rasterung 106 in Richtung der Fahrgassen 102 angelegt, wie dieses in den Fig.2 und 3 dargestellt ist.

Desweiteren ist erfindungsgemäß vorgesehen, daß das Dosierorgan am Vorgewende automatisch aufgrund des Positionsgebers zum Erzeugen von Feldkoordinatensignalen (GPS) in Verbindung mit den abgespeicherten Felddaten (Applikationskarte 107) abgeschaltet wird.

Desweiteren ist es möglich, daß an dem Rechner zur Erhöhung der Genauigkeit der GPS-Signale zusätzliche Sensoren, wie Radar-, Lenkwinkelgeberoder Radsensoren (Messung der Wegstrecke) vorgesehen sind.

Ebenfalls ist es möglich, daß der Öffnungsund Schließvorgang der Dosierorgane bzw. des Dosierorganes eines Schleuderdüngerstreuers unter Berücksichtigung der Überlappung am Vorgewende mit der Fahrgasse entsprechenden Vorgabe in der Karte durchgeführt wird.

## Patentansprüche

1. Verfahren zum Steuern und/oder Regeln von landwirtschaftlichen Bearbeitungs- und/oder Verteilmaschinen, bei dem in einem Rechner maschinenspezifische Daten zur Einstellung der Maschine je Standort und Fläche einzuspeichern sind, wobei in dem Rechner eine beispielsweise unter Hinzuziehung von Bodenproben, Ertragskarten, Klimadaten etc. erstellte Applikationskarte (101) für die angepasste bodenspezifische Düngergabe eingebbar ist,
**dadurch gekennzeichnet, dass**
die Applikationskarte (101) mittels eines Rasterverfahrens zur Begrenzung der Daten gerastert ist und dass aufgrund der gerasterten Applikationskarte und der maschinenspezifischen Verteilcharakteristik eine Arbeitsdatei erstellt wird und dass diese Arbeitsdatei eine optimale Anpassung zwischen Applikationskarte und Verteilcharakteristik darstellt.

2. Verteilmaschine nach Anspruch 1,
**dadurch gekennzeichnet, dass**
die Rasterung (6) in Richtung der Fahrgasse (102) angelegt wird.

3. Verfahren nach einem oder mehreren der vorstehenden Ansprüche,
**dadurch gekennzeichnet, dass**
das Dosierorgan am Vorgewende automatisch aufgrund des Positionsgebers zum Erzeugen von Feldkoordinatensignale (GPS) in Verbindung mit den abgespeicherten Felddaten abgeschaltet wird.

4. Verfahren nach einem oder mehreren der vorstehenden Ansprüche,
**dadurch gekennzeichnet, dass**
an dem Rechner zur Erhöhung der Genauigkeit der GPS-Signale zusätzliche Sensoren, wie Radar, Lenkwinkelgeber oder Radsensoren (Messung der Wegstrecke) vorgesehen sind.

5. Verfahren nach einem oder mehreren der vorstehenden Ansprüche,
**dadurch gekennzeichnet, dass**
der Öffnungs- und Schließvorgang des Dosierorgans eines Schleuderdüngerstreuers unter Berücksichtigung der Überlappung am Vorgewende mit der Fahrgasse entsprechenden Vorgabe in der Feldkarte durchgeführt wird.

## Claims

1. Method of controlling and/or regulating agricultural processing and/or distributing machines, wherein data, specific to a machine, is to be stored in a computer for setting the machine according to position and area, wherein a user map (101), which is established, for example, with the addition of ground samples, yield maps, climate data, etc., is insertable in the computer for the adapted delivery of fertiliser specific to the ground, **characterised in that** the user map (101) is divided-up in a grid pattern by means of a grid-producing method ford limiting the data, and **in that** a workfile is established on the basis of the user map, which is divided-up in a grid pattern, and the distribution characteristics specific to a machine, and **in that** this workfile constitutes an optimum adaptation between user map and distribution characteristics.

2. Distributing machine according to claim 1, **characterised in that** the grid pattern (6) is established in the direction of the tramline (102).

3. Method according to one or more of the preceding claims, **characterised in that** the metering member is switched-off at the turning point automatically because of the position transmitter for generating field co-ordinate signals (GPS) in conjunction with the stored field data.

4. Method according to one or more of the preceding claims, **characterised in that**, to increase the accuracy of the GPS signals, additional sensors, such as radar, steering angle transmitters or wheel sensors (measurement of the travel path), are provided on the computer.

5. Method according to one or more of the preceding claims, **characterised in that** the opening and closing processes of the metering member of a centrifugal fertiliser spreader are accomplished with the guideline in the field map corresponding to the tramline, whilst taking into consideration the overlap at the turning point.

## Revendications

1. Procédé de commande et/ou de régulation de machines agricoles de travail du sol et/ou de distribution, selon lequel on enregistre dans un calculateur les données caractéristiques de la machine pour régler la machine suivant l'emplacement et la surface à travailler, le calculateur pouvant recevoir une carte d'application (101) utilisant par exemple des échantillons du sol, des cartes de rendement, des données climatiques etc.., ainsi établie pour la distribution de l'engrais adaptée au sol,
**caractérisé en ce qu'**
on trame la carte d'application (101) avec un procédé de tramage pour limiter la quantité de données, et à partir de la carte d'application tramée et de la caractéristique de distribution spécifique à la machine, on établit un fichier de travail, ce fichier de travail représentant une adaptation optimale entre la carte d'application et la caractéristique de dis tribution.

2. Machine distributrice selon la revendication 1,
**caractérisée en ce qu'**
on réalise le tramage (6) dans la direction des voies de passage (102).

3. Procédé selon l'une quelconque des revendications précédentes,
**caractérisé en ce qu'**
on coupe l'organe de dosage avant l'opération de retournement, automatiquement à l'aide du capteur de position générant les signaux de coordonnées de champ GPS en liaison avec les données enregistrées du champ.

4. Procédé selon l'une quelconque des revendications précédentes,
**caractérisé en ce que**
le calculateur comporte des capteurs supplémentaires tels que des capteurs radar, des capteurs d'angle de braquage ou des capteurs de roues (mesure de la trajectoire parcourue) sur le calculateur pour augmenter la précision des signaux GPS.

5. Procédé selon l'une ou plusieurs des revendications précédentes,
**caractérisé en ce que**
l'opération d'ouverture et de fermeture de l'organe de dosage d'un épandeur centrifuge d'engrais est effectuée en tenant compte du chevauchement avant le retournement en bout de champ en prédéterminant de manière correspondante les voies de passage sur la carte du champ.
